# EUROPEAN PATENT SPECIFICATION

(11) **EP 2 885 509 B1**
(45) Date of publication and mention of the grant of the patent: **02.08.2017**
(21) Application number: 13723736.8
(22) Date of filing: 13.05.2013
(51) Int. Cl.: F01D 21/00, F01D 5/14

(54) **TURBOMACHINE COMPONENT MARKING**
TURBOMASCHINENKOMPONENTENKENNZEICHNUNG
MARQUAGE DE COMPOSANT DE TURBOMACHINE

(30) Priority: 17.08.2012 EP 12180880
(43) Date of publication of application: 24.06.2015
(73) Proprietor: Siemens Aktiengesellschaft, 80333 München (DE)
(72) Inventor: BULAT, Ghenadie, Lincoln Lincolnshire LN6 8BD (GB); MAY, Jonathan, Lincoln Lincolnshire LN6 9HL (GB)
(74) Representative: Maier, Daniel Oliver
(86) International application number: PCT/EP2013/059808
(87) International publication number: WO 2014/026775

(56) References cited:
- EP-A1- 1 657 536
- EP-A2- 1 956 195
- US-A1- 2012 167 664

## Description

### Field of invention

The present invention relates to a system for indicating wear of a turbomachine and a method for indicating wear of a turbomachine.

### Art Background

In turbomachines, in particular in gas turbines, the working gas of the gas turbine causes wear to critical parts of the gas turbine. Material loss due to wear may arise in contacts between components such as between a transition duct and a combustion can or between cross lightning tubes and combustion cans or in the interlock between two turbine blade shrouds or in rotor seals e.g. labyrinth seals or seals bridging gaps between adjacent components e.g. turbine vane platforms or combustor liner tiles, just to mention a few examples. The wear may be caused by vibrations from the rotor during operation or induced by instationary variations in the flow field of the working fluid or by combustion instablities or movement due to temperature differences during transients or changes in loads affecting the component. Wear may also arise simply from the exposure of a surface to particles or substances present in the working fluid flowing through the turbomachine i.e. erosion or oxidation or corrosion. Fretting is the wear of contact surfaces induced under load and in the presence of repeated relative surface motion, as for example by vibration.

Currently, the inspection intervals and replacement of the components are based on overall engine experience. Alternatively, the replacements of the components are based on a reported fault of an engine.

Specifically, during inspection of the turbomachine, wear or the extent of the wear is not easy to recognize hence the inspection of the turbomachine is a specialist's job, which success relies on human experience to identify certain levels of wear.

Furthermore, wear detection systems are known in order to identify wear of a component.

US 4,604,604 discloses a vapor emitting wear indicator. After a part is worn out, coloured vapor may be emitted in order to indicate if in particular a disc break lining or clutch pad is worn out.

US 2002/0153214 A1 discloses a friction disc to which various sensor elements or rod-shaped sensors are installed in order to determine the wear of a respective friction disc.

US 2009/0107795 A1 discloses a material wear indication system in order to indicate wear of a friction plate. A wear indicator is embedded in a non-wearable portion and is prevented from contacting a moving surface until the wearable surface has been sufficiently eroded. When the wear indicator contacts the moving surface, it emits a particulate matter that can be detected by sensor. The sensor is operable to generate an electrical signal that is transmitted to a control unit.

EP 1 956 195 A2 discloses a surface mounted heater assembly for an aerospace component having a support layer, an electrically resistive heater foil element supported by the support layer, a coating covering the heater element; and an adhesive to secure said support layer to the component is provided. The coating has two layers that are visually distinct to permit identification of potential exposure of the heater foil element.

### Summary of the Invention

It may be an objective of the present invention to provide a more reliable wear indicator for a turbomachine.

This objective is solved by a system for indicating a wear of a turbomachine and by a method for indicating wear of a turbomachine according to the independent claims.

According to a first aspect of the present invention, a system for indicating wear of the turbomachine is presented. The system comprises a turbomachine component and a top layer, which partially covers at least partially a surface of the turbomachine component. An indicating layer is formed on the surface of the turbomachine component. The top layer covers the indicating layer, such that the indicating layer becomes visible if the top layer is worn out by wear due to exposure to a working fluid or is fretted by fretting due to a contact of the turbomachine component with a further turbomachine component.

Specifically, the further turbomachine component (at least partially) overlaps and contacts the turbomachine component in a contact area of the turbomachine component. A groove is formed to the turbomachine component in the contact area with the further turbomachine component. The indicating layer is formed within the groove or recess of the turbomachine component. The top layer is formed within the groove and covers the indicating layer such that the indicating layer becomes optically detectable if the top layer is fretted by fretting due to the contact and a relative movement of the turbomachine component with the further turbomachine component.

The top layer may comprise a first colour and the indicating layer may comprise an indicating colour, which differs from the first colour, such that the indicating layer becomes optically detectable (e.g. by a sensor or visible by a person), if the top layer is worn out by wear. Alternatively, the indicating layer may comprise an indicating structure (e.g. grooves or hole patterns) which differs to a structure of the top layer.

According to a further aspect of the present invention, a method for indicating wear of a turbomachine is presented. According to the method, wear of the turbomachine is indicated by an indicating colour of an indicating layer, if a top layer is worn out by wear. The top layer at least partially covers a surface of the turbomachine component, wherein the top layer comprises a first colour. The indicating layer is interposed between the top layer and the surface of the turbomachine component, such that the indicating layer is optically detectable, if the top layer is worn out by wear. The indicating colour may differ from the first colour of the top layer.

The turbomachine may be a gas turbine, a steam turbine, a turbocharger or a process compressor, for example.

The turbomachine component may be for example a combustion chamber, a blade, a vane, a seal, a tile, a transition duct or a wall section of the turbomachine. In particular, the turbomachine component is a component of the turbomachine, which is affected by or in contact with the working fluid of the turbomachine. The working fluid may be for example a combustion gas and thus a hot gas streaming along a combustor or turbine component.

The top layer covers the surface at least of a section of the turbomachine component and may fully cover the indicating layer. The top layer may be a smooth low flow resistance layer and/or an oxidation protecting layer in order to provide an efficient turbomachine e.g. a compressor or to protect the turbomachine component from the hot and aggressive working gas of the gas turbine.

The indicating layer may also be an oxidation protecting layer in order to protect the turbomachine component from the hot and aggressive working gas of the gas turbine. The indicating layer covers the surface at least of a section of the turbomachine component. In particular, the indicating layer may have a band- or strip-like shape.

Particularly, according to a further exemplary embodiment, the top layer and/or the indicating layer is an oxidation protection coating layer, wherein the oxidation protection coating layer has a higher resistance to oxidation in comparison to the material of the turbomachine component.

Particularly, according to a further exemplary embodiment, the top layer and/or the indicating layer is a smooth surface coating layer, wherein the smooth surface coating layer has a lower surface roughness or coefficient of friction in comparison to the material of the turbomachine component. In other - more generalised - words, the top layer and/or the indicating layer may be a first surface coating layer, wherein the first surface coating layer has a lower surface roughness or coefficient of friction in comparison to the material of the turbomachine component and/or in comparison to other coatings applied.

The terminology "smooth surface coating layer" is used in the field for example for "SermaFlow S4000" coating, which is a trademark of the company Praxair Surface Technologies Inc., or for example for "IP 9442 Smoothcote", a trademark of the company Indestructible Paint Ltd. Other coatings which are considered "smooth" may be available. As already indicated, "smooth surface coating layer" defines a coating that results in very aerodynamic surfaces with, for example, little resistance to airflow for carbon deposits to adher to.

The indicating layer is interposed between the top layer and the surface of the section of the turbomachine components, wherein the indicating layer becomes optically detectable, if the top layer has disappeared and worn out by wear, which is caused by the working gas streaming along the top layer, or by friction against different components, i.e. by fretting due to a contact of the turbomachine component with a further turbomachine component.

In particular, the colour and/or the surface structure (patterns of holes, rills or chamfers) of the top layer differs from a respective indicating colour and/or surface structure of the indicating layer. This leads to the technical effect that a worn out turbomachine component is identifiable more reliable such that the overall turbomachine reliability is increased. Specifically, a person inspecting the turbomachine, easily recognizes a worn out turbomachine component, if the indicating layer is visible. Hence, by the present invention, a wear indicator is provided by applying an indicating layer below the top layer.

The life of the turbomachine components is limited by the wear e.g. fretting, in particular, at the joint between two turbomachine components. In conventional approaches, the person inspecting the components does not get any information on the remaining lifetime of the components and the wear status of the component. It is extremely difficult to accurately predict the remaining lifetime of turbomachine components at the moment.

By the indication of the present status of wear according to the present invention it is easier to predict the lifetime of the components, because the person inspecting the turbomachine component easily recognizes a worn out status i.e. may not continue to be used until next service inspection, if the indicating layer is visible. Hence, it is not necessary to use human skills and experiences to determine, if a part is worn out and is needed to be replaced. By the wear indicating layer according to the present invention, a clear indication is given, even to untrained personnel, when a component is near at the end of its lifetime or requires immediate replacement.

According to further exemplary embodiments, the indicating colour differs to a component colour of the turbomachine component. Hence, the top layer, the indicating layer and the component colour may comprise three different colours. Hence, it is predicted more precisely, which state of wear is present. For example, if the indicating layer is visible, the turbomachine may still be reliable to operate for a certain period of time. If the turbomachine component is already visible, an immediate exchange of the respective turbomachine component is necessary.

In particular, the turbomachine component may be made from a metal composition and the top layer and indicating layer may be made from a coating composition. The turbomachine components as well as the respective top layer and indicating layer may be coloured by various colouring method.

According to further exemplary embodiments, a further indicating layer with a further indicating colour is interposed between the top layer and the indicating layer. The further indicating colour differs from the indicating colour, the top layer colour and the component colour of the turbomachine component. Hence, by interposing a plurality of further indicating layers with various differing colours, a very precise indicating system is provided. Each colour of the various indicating layer is classified and listed in a control list, for example, so that the person inspecting the turbomachine component is aware of the state of wear of the respective turbomachine component. For example, the top layer may have a white top layer colour, the further indicating layer may have a yellow further indicating colour, and the indicating layer closest to the turbomachine component may have a red indicating colour. When the inspector sees the yellow further indicating layer, the turbomachine component may be still used for certain amount of time and may be substituted at the next service interval. If the inspector sees already the red indicating layer, the turbomachine component should be changed immediately.

According to further exemplary embodiments, the top layer, the indicating layer and/or the further indicating layer is/are a hard coating layer, wherein the hard coating layer has a lower coefficient of friction and a higher resistance to contact wear or wear caused by the working gas of the turbomachine in comparison to the turbomachine component.

Hard protective coatings may be coated to turbomachine component by chemical (CVD) and physical (PVD) vapour deposition techniques. Various PVD methods may be used, e.g. magnetron sputtering, evaporation by laser, cathode arc and/or electron beam physical vapour deposition.

The hard coatings (e.g. the (further) indicating layer and/or the top layer) are based on e.g. transition metal nitrides (e.g. TiN, CrN) or multicomponent coatings (e.g. TiAlN), multilayer coatings (e.g. TiN/TiAlN) as well as carbon-based coatings (DLC). Furthermore, nanocomposite (TiN+DLC) coatings and lubricating coatings (WC+C) may be applied. Furthermore, the (further) indicating layer and/or the top layer may comprise a PtAl coating or a MCrAlY coating, wherein the "M" in particular denotes Nickel (Ni), Cobalt (Co) or a mixture of both.

Hence, the indicating layer, the top layer, the turbomachine component and the further turbomachine component may be made of metal material, such that a metal-to-metal contact between the respective components is formed.

According to further exemplary embodiments, the turbomachine component is a combustion chamber, a blade, a vane, a seal, a tile, a transition duct or a wall section of the turbomachine. The top layer is exposed to a working gas of a turbomachine or to a direct contact against different component(s).

According to further exemplary embodiments, the turbomachine component has a curved shape with a circumferential direction. The indicating layer comprises a plurality of indicating layer sections, wherein the indicating layer sections are spaced from each other along the circumferential direction.

For example, the indicating layer sections may have a band- or strip-like shape. For example, the turbomachine component (e.g. a combustion chamber) may have a tubular shape, wherein a plurality of band- or strip-like shaped indicating layer sections are arranged to an inner wall of the turbomachine component along the circumferential direction of the tubular turbomachine component. The band- or strip-like shaped indicating layer sections are spaced between each other along the circumferential direction. For example, four spaced band- or strip-like shaped indicating layer sections may be arranged along the circumferential direction. Alternatively, the indicating layer sections may have a circular cross section and may thus form an indicating circle.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows schematically a turbomachine component, which is a combustion chamber according to an exemplary embodiment of the present invention;
- Fig. 2: shows schematically a system for indicating wear and fretting between two turbomachine components according to an exemplary embodiment of the present invention; and
- Fig. 3: shows schematically a system for indicating wear of a turbomachine component which is vane according to an exemplary embodiment of the present invention.

### Detailed Description

The illustrations in the drawings are schematically. It is noted that in different figures, similar or identical elements are provided with the same reference signs.

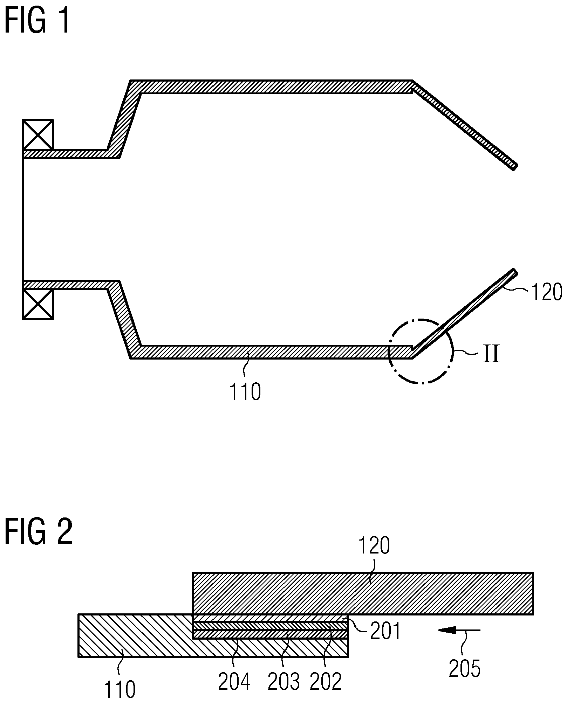

Fig. 1 shows an exemplary embodiment of the present invention, wherein the turbomachine component 110 is a combustion chamber of a gas turbine, for example. A working gas and in particular a combustion gas, which flows through the inner volume of the combustion chamber, is guided by the walls of the combustion chamber along a desired direction. Specifically, at regions, where the hot combustion gas is guided and deflected by the wall sections, fretting and wear may occur in the contact between the combustion chamber and a further turbomachine component 120, which is in this exemplary embodiment a transition duct.

Furthermore, fretting may occur due to relative movements between the turbomachine component 110 and an abutting further turbomachine component 120, such as a transition duct as shown in Fig. 1. In other words, the turbomachine component 110 and the further turbomachine component 120 contact each other in a contact area, such that fretting in the contact area between the components 110, 120 occurs.

Hence, in such critical regions of the turbomachine component 110 and/or the further turbomachine component 120, the system 100 for indicating wear may be applied such that the progress of wear and fretting is easily visible and thus measureable. The sketch II-II shows the system 100 in more detail in Fig.2.

Fig. 2 shows the system 100 for indicating wear of a turbomachine. The system 100 comprises the turbomachine component 110. Furthermore, a top layer 201 partially covers a surface of a section of the turbomachine component 110. The top layer 201 may comprise a top layer colour or a top layer structure (pattern of holes or rills). Furthermore, an indicating layer 202 is interposed between the top layer 201 and the surface of the section of the turbomachine component 110. The indicating layer 202 comprises an indicating colour or an indicating structure (pattern of holes or rills), which differs from the top layer colour or structure, such that the indicating layer 202 becomes optically detectable, i.e. visible, from the direction of view 205, if the top layer 101 is worn out by wear or fretting.

The turbomachine component 110 may be inner wall of a combustion chamber and the further turbomachine component 120 may be a transition duct, for example, which guides the hot combustion gas further downstream. Due to vibrations between the turbomachine component 110 and the further turbomachine component 120 fretting (e.g. metal-to-metal fretting) between these components 110, 120 occurs such that material in the contact area dissipates.

The components 110, 120 may move relative to each other due to thermal expansion and/or combustion dynamics such that the probability of failure due to fretting between two components 110, 120 is high.

In the contact area the turbomachine component 110 with the further turbomachine component 120 a groove 204 is formed to turbomachine component 110, in which the top layer 201 (which is in contact with the further turbomachine component 120), the indicating layer 202 and optionally one or more further indicating layers 203 may be applied.

An inspector inspecting the fretting and the wear of the components 110, 120 looks along the direction of view 205. Due to the visible top and indicating layers 201, 202, 203 and the respective patterns of the visible top and indicating layers 201, 202, 203 the inspector may easily recognise the fretting and wear status.

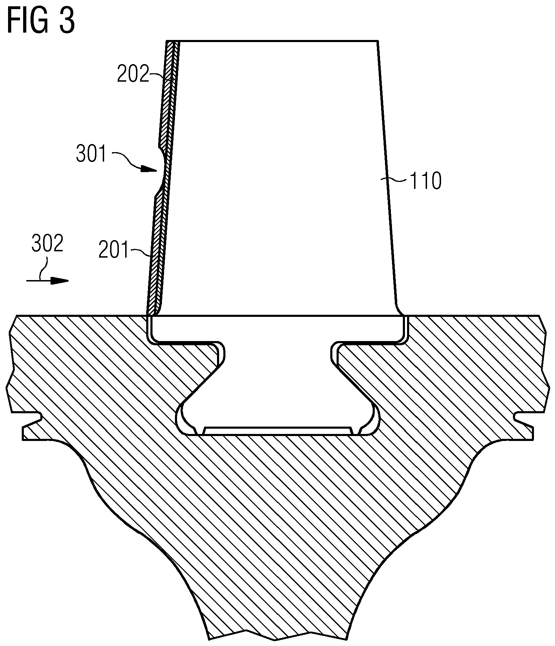

Fig. 3 shows a further exemplary embodiment. The system 100 comprises the turbomachine component 110 which may be a compressor blade or vane, for example. The turbomachine component 110 may have the top layer 201 which is exposed to the working gas of the turbomachine, which flows along the flow direction 302 at e.g. a leading edge of the compressor blade. The top layer 201 may be an oxidation protection coating layer to protect the base material of the turbine component 110 from oxidation or corrosion caused by part of the composition of the working fluid for example air e.g. sea water or other aggressive chemicals. The top layer 201 may also be a coating which improves the surface finish of the compressor blade and a platform of the exemplary compressor blade. The lower surface roughness and friction provided by the top layer 201 increases the compressor efficiency and performance regarding flow capacity and surge margin. Over time the coating is worn off by the exposure to the working fluid.

In Fig. 3, a worn out section 301 of the top layer 201 is shown. The inspector, who inspects the turbomachine component 110, recognizes the worn out section 301 easily, because he or she sees the indicating colour of the indication layer 202 through the worn out section 301. Hence, the inspector can easily note the status of wear. If the colour of the turbine component 110 is visible through the worn out section 301, the protecting layers, i.e. the top layer 201 and the indicating layer 202, are worn out, so that the turbomachine component 110 has to be substituted or repaired by for example recoating.

Also a plurality of further interposed indicating layers 203 may be interposed between the top layer 201 and the turbomachine component 110. Hence, if indicating layers 201, 202, 203 have different colours with respect to each other, a very detailed system for indicating wear of the turbomachine component may be provided.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. System (100) for indicating wear of a turbomachine, the system (100) comprising
a turbomachine component (110),
a further turbomachine component (120) which contacts the turbomachine component (110),
**characterised in that** a groove (204) is formed to the turbomachine component (110) in a contact area with the further turbomachine component (120),
an indicating layer (202) which is formed within the groove (204) of the turbomachine component (110), and
a top layer (201) which is formed within the groove (204) and which covers the indicating layer (202), such that the indicating layer (202) becomes optically detectable if the top layer (201) is fretted by contact of the turbomachine component (110) with the further turbomachine component (120).

2. System (100) according to claim 1,
wherein the top layer (201) comprises a top layer colour, and
wherein the indicating layer (202) comprises an indicating colour which differs from the top layer colour.

3. System (100) according to claim 1 or 2,
wherein the top layer (201) comprises a top layer structure, and
wherein the indicating layer (202) comprises an indicating structure which differs from the top layer structure.

4. System (100) according to one of the claims 1 to 3,
wherein the indicating colour differs from a component colour of the turbomachine component (110).

5. System (100) according to one of the claims 1 to 4, further comprising
a further indicating layer (203) with a further indicating colour,
wherein the further indicating layer (203) is interposed between the top layer (201) and the indicating layer (202), and
wherein the further indicating colour differs from the indicating colour, from the top layer colour and from a component colour of the turbomachine component (110).

6. System (100) according to one of the claims 1 to 5,
wherein the top layer (201) and/or the indicating layer (202) is a hard coating layer,
wherein the hard coating layer has a lower coefficient of friction and a higher resistance to wear or fretting in comparison to the material of the turbomachine component (110).

7. System (100) according to one of the claims 1 to 6,
wherein the top layer (201) and/or the indicating layer (202) is an oxidation protection coating layer, and
wherein the oxidation protection coating layer has a higher resistance to oxidation in comparison to the material of the turbomachine component (110).

8. System (100) according to one of the claims 1 to 7,
wherein the top layer (201) and/or the indicating layer (202) is a smooth surface coating layer, and
wherein the smooth surface coating layer has a lower surface roughness or coefficient of friction in comparison to the material of the turbomachine component (110).

9. System (100) according to one of the claims 1 to 8,
wherein the turbomachine component (110) is a combustion chamber, a blade, a vane, a seal, a tile, a transition duct or a wall section of the turbomachine.

10. System (100) according to one of the claims 1 to 9,
wherein the turbomachine component (110) has a curved shape with a circumferential direction,
wherein the indicating layer (202) comprises a plurality of indicating layer sections which is interposed between the top layer (201) and the surface of the turbomachine component (110), and
wherein the indicating layer sections are spaced apart from each other along the circumferential direction.

11. Method for indicating wear of a turbomachine, the method comprising
indicating wear of a turbomachine component (110) by an indicating layer (202) if a top layer (201) is fretted by fretting due to a contact of the turbomachine component (110) with a further turbomachine component (120),
wherein the further turbomachine component (120) contacts the turbomachine component (110),
wherein a groove (204) is formed to the turbomachine component (110) in a contact area with the further turbomachine component (120),
wherein the indicating layer (202) is formed within the groove (204) of the turbomachine component (110), and wherein the top layer (201) is formed on within the surface groove (204) and covers the indicating layer (202), such that the indicating layer (202) becomes optically detectable if the top layer (201) is fretted by fretting.

## Patentansprüche

1. System (100) zum Anzeigen von Verschleiß bei einer Turbomaschine, das Folgendes umfasst:
eine Turbomaschinenkomponente (110),
eine weitere Turbomaschinenkomponente (120), die die Turbomaschinenkomponente (110) berührt,
**dadurch gekennzeichnet, dass** in einem Kontaktbereich mit der weiteren Turbomaschinenkomponente (120) eine Nut (204) an der Turbomaschinenkomponente (110) ausgebildet ist,
eine Anzeigeschicht (202), die in der Nut (204) der Turbomaschinenkomponente (110) ausgebildet ist, und
eine obere Schicht (201), die in der Nut (204) ausgebildet ist und die Anzeigeschicht (202) so bedeckt, dass die Anzeigeschicht (202) optisch erkennbar wird, wenn sich die obere Schicht (201) durch Kontakt der Turbomaschinenkomponente (110) mit der weiteren Turbomaschinenkomponente (120) abnutzt.

2. System (100) nach Anspruch 1,
wobei die obere Schicht (201) eine Farbe der oberen Schicht umfasst und
wobei die Anzeigeschicht (202) eine Anzeigefarbe umfasst, die sich von der Farbe der oberen Schicht unterscheidet.

3. System (100) nach Anspruch 1 oder 2,
wobei die obere Schicht (201) eine Struktur der oberen Schicht umfasst und
wobei die Anzeigeschicht (202) eine Anzeigestruktur umfasst, die sich von der Struktur der oberen Schicht unterscheidet.

4. System (100) nach einem der Ansprüche 1 bis 3,
wobei sich die Anzeigefarbe von einer Komponentenfarbe der Turbomaschinenkomponente (110) unterscheidet.

5. System (100) nach einem der Ansprüche 1 bis 4, das ferner Folgendes umfasst:
eine weitere Anzeigeschicht (203) mit einer weiteren Anzeigefarbe,
wobei die weitere Anzeigeschicht (203) zwischen der oberen Schicht (201) und der Anzeigeschicht (202) angeordnet ist und
wobei sich die weitere Anzeigefarbe von der Anzeigefarbe, von der Farbe der oberen Schicht und von einer Komponentenfarbe der Turbomaschinenkomponente (110) unterscheidet.

6. System (100) nach einem der Ansprüche 1 bis 5,
wobei es sich bei der oberen Schicht (201) und/oder der Anzeigeschicht (202) um eine Hartstoffschicht handelt,
wobei die Hartstoffschicht im Vergleich zum Material der Turbomaschinenkomponente (110) einen niedrigeren Reibungskoeffizienten und eine höhere Verschleiß- oder Abnutzungsbeständigkeit aufweist.

7. System (100) nach einem der Ansprüche 1 bis 6,
wobei es sich bei der oberen Schicht (201) und/oder der Anzeigeschicht (202) um eine Oxidationsschutzschicht handelt und
wobei die Oxidationsschutzschicht im Vergleich zum Material der Turbomaschinenkomponente (110) eine höhere Oxidationsbeständigkeit aufweist.

8. System (100) nach einem der Ansprüche 1 bis 7,
wobei es sich bei der oberen Schicht (201) und/oder der Anzeigeschicht (202) um eine Schicht mit glatter Oberfläche handelt und
wobei die Schicht mit glatter Oberfläche im Vergleich zum Material der Turbomaschinenkomponente (110) eine geringere Oberflächenrauheit oder einen niedrigeren Reibungskoeffizienten aufweist.

9. System (100) nach einem der Ansprüche 1 bis 8,
wobei es sich bei der Turbomaschinenkomponente (110) um eine Brennkammer, eine Laufschaufel, eine Leitschaufel, eine Dichtung, einen Ziegel, einen Übergangskanal oder einen Wandabschnitt der Turbomaschine handelt.

10. System (100) nach einem der Ansprüche 1 bis 9,
wobei die Turbomaschinenkomponente (110) eine gekrümmte Form mit einer Umfangsrichtung aufweist,
wobei die Anzeigeschicht (202) mehrere Anzeigeschichtabschnitte umfasst, die zwischen der oberen Schicht (201) und der Oberfläche der Turbomaschinenkomponente (110) angeordnet sind, und
wobei die Anzeigeschichtabschnitte in Umfangsrichtung voneinander beabstandet sind.

11. Verfahren zum Anzeigen von Verschleiß bei einer Turbomaschine, das Folgendes umfasst:
Anzeigen von Verschleiß bei einer Turbomaschinenkomponente (110) durch eine Anzeigeschicht (202), wenn sich eine obere Schicht (201) durch Abnutzung aufgrund eines Kontakts der Turbomaschinenkomponente (110) mit einer weiteren Turbomaschinenkomponente (120) abnutzt,
wobei die weitere Turbomaschinenkomponente (120) die Turbomaschinenkomponente (110) berührt,
wobei in einem Kontaktbereich mit der weiteren Turbomaschinenkomponente (120) eine Nut (204) an der Turbomaschinenkomponente (110) ausgebildet ist,
wobei die Anzeigeschicht (202) in der Nut (204) der Turbomaschinenkomponente (110) ausgebildet ist und
wobei die obere Schicht (201) in der Oberflächennut (204) ausgebildet ist und die Anzeigeschicht (202) so bedeckt, dass die Anzeigeschicht (202) optisch erkennbar wird, wenn sich die obere Schicht (201) durch Abnutzung abnutzt.

## Revendications

1. Système (100) permettant d'indiquer l'usure d'une turbomachine, le système (100) comprenant :
un composant (110) de turbomachine,
un autre composant (120) de turbomachine qui est en contact avec le composant (110) de turbomachine,
**caractérisé en ce qu'**une rainure (204) est formée sur le composant (110) de turbomachine dans une zone de contact avec l'autre composant (120) de turbomachine ;
une couche indicatrice (202) qui est formée dans la rainure (204) du composant (110) de turbomachine, et
une couche supérieure (201) qui est formée dans la rainure (204) et qui couvre la couche indicatrice (202) de telle sorte que la couche indicatrice (202) devienne détectable optiquement si la couche supérieure (201) est érodée par le contact du composant (110) de turbomachine avec l'autre composant (120) de turbomachine.

2. Système (100) selon la revendication 1,
étant entendu que la couche supérieure (201) possède une couleur de couche supérieure, et
étant entendu que la couche indicatrice (202) possède une couleur indicatrice qui diffère de la couleur de couche supérieure.

3. Système (100) selon la revendication 1 ou 2,
étant entendu que la couche supérieure (201) possède une structure de couche supérieure, et
étant entendu que la couche indicatrice (202) possède une structure indicatrice qui diffère de la structure de couche supérieure.

4. Système (100) selon l'une des revendications 1 à 3, étant entendu que la couleur indicatrice diffère d'une couleur de composant du composant (110) de turbomachine.

5. Système (100) selon l'une des revendications 1 à 4, comprenant par ailleurs :
une autre couche indicatrice (203) possédant une autre couleur indicatrice,
étant entendu que l'autre couche indicatrice (203) est interposée entre la couche supérieure (201) et la couche indicatrice (202), et
étant entendu que l'autre couleur indicatrice diffère de la couleur indicatrice, de la couleur de couche supérieure et d'une couleur de composant du composant (110) de turbomachine.

6. Système (100) selon l'une des revendications 1 à 5,
étant entendu que la couche supérieure (201) et/ou la couche indicatrice (202) est une couche de revêtement dur ;
étant entendu que la couche de revêtement dur a un coefficient de frottement plus faible et une résistance plus élevée à l'usure ou à l'érosion en comparaison du matériau du composant (110) de turbomachine.

7. Système (100) selon l'une des revendications 1 à 6,
étant entendu que la couche supérieure (201) et/ou la couche indicatrice (202) est une couche de revêtement de protection contre l'oxydation, et
étant entendu que la couche de revêtement de protection contre l'oxydation possède une résistance plus élevée à l'oxydation en comparaison du matériau du composant (110) de turbomachine.

8. Système (100) selon l'une des revendications 1 à 7,
étant entendu que la couche supérieure (201) et/ou la couche indicatrice (202) est une couche de revêtement de surface tendre, et
étant entendu que la couche de revêtement de surface tendre possède une rugosité superficielle ou un coefficient de frottement plus faible en comparaison du matériau du composant (110) de turbomachine.

9. Système (100) selon l'une des revendications 1 à 8,
étant entendu que le composant (110) de turbomachine est une chambre de combustion, une aube mobile, une aube fixe, un joint d'étanchéité, une tuile, un raccord de transition ou un segment de paroi de la turbomachine.

10. Système (100) selon l'une des revendications 1 à 9,
étant entendu que le composant (110) de turbomachine a une forme courbée possédant une direction circonférentielle ;
étant entendu que la couche indicatrice (202) comprend une pluralité de sections de couche indicatrice qui sont interposées entre la couche supérieure (201) et la surface du composant (110) de turbomachine, et
étant entendu que les sections de couche indicatrice sont espacées les unes par rapport aux autres suivant la direction circonférentielle.

11. Procédé permettant d'indiquer l'usure d'une turbomachine, le procédé consistant :
à indiquer l'usure d'un composant (110) de turbomachine au moyen d'une couche indicatrice (202) si une couche supérieure (201) est érodée par l'érosion due à un contact du composant (110) de turbomachine avec un autre composant (120) de turbomachine,
étant entendu que l'autre composant (120) de turbomachine est en contact avec le composant (110) de turbomachine ;
étant entendu qu'une rainure (204) est formée sur le composant (110) de turbomachine dans une zone de contact avec l'autre composant (120) de turbomachine ;
étant entendu que la couche indicatrice (202) est formée dans la rainure (204) du composant (110) de turbomachine, et
étant entendu que la couche supérieure (201) est formée dans la rainure de surface (204) et couvre la couche indicatrice (202) de telle sorte que la couche indicatrice (202) devienne détectable optiquement si la couche supérieure (201) est érodée par érosion.
